# EUROPEAN PATENT APPLICATION

(11) **EP 2 713 014 A2**
(43) Date of publication of application: **02.04.2014**
(21) Application number: 13181820.5
(22) Date of filing: 27.08.2013
(51) Int. Cl.: F01D 11/00

(54) **Annulus filler for axial flow machine**

(30) Priority: 27.09.2012 GB 201217257
(71) Applicant: Rolls-Royce plc, London SW1E 6AT (GB)
(72) Inventor: Bottome, Kristofer, Nottingham, Nottinghamshire NG8 4BE (GB); Mason, Paul, Derby, Derbyshire DE24 0YB (GB)
(74) Representative: Gee, Philip David

(57) **Abstract**

A fluid-washed assembly for an axial flow machine, such as a fan blade assembly for a gas turbine engine. The assembly has an array of members (124) circumferentially spaced about the machine axis, each member extending from a radially inner end to a radially outer end with respect to the axis of rotation of the machine. Each member has opposing outer surfaces extending between a leading edge and a trailing edge thereof with respect to the direction of oncoming fluid flow in use. A plurality of annulus fillers are provided between each member (124), wherein each annulus filler (130,132) is affixed against an outer surface of an associated member at a location between the inner and outer ends in a manner which supports the annulus filler in use. The annulus filler (130,132) may be suspended by the member. In preferred embodiments, the annulus fillers comprise a composite material which is bonded to the associated member using an adhesive.

## Description

The present invention relates to annulus fillers for spanning a gap between generally radially extending components within an axial flow machine, such as, for example, blades or vanes within a turbomachine.

The primary purpose of an annulus filler is to provide a fluid washed surface between adjacent components of an assembly. Annulus fillers are conventionally provided between adjacent blades of a fan blade assembly for a gas turbine engine such that the assembly has a substantially continuous inner circumferential surface about the rotor axis. Annulus fillers may also be provided for propeller assemblies and/or between static structures within the engine such as between outlet guide vanes downstream of the fan.

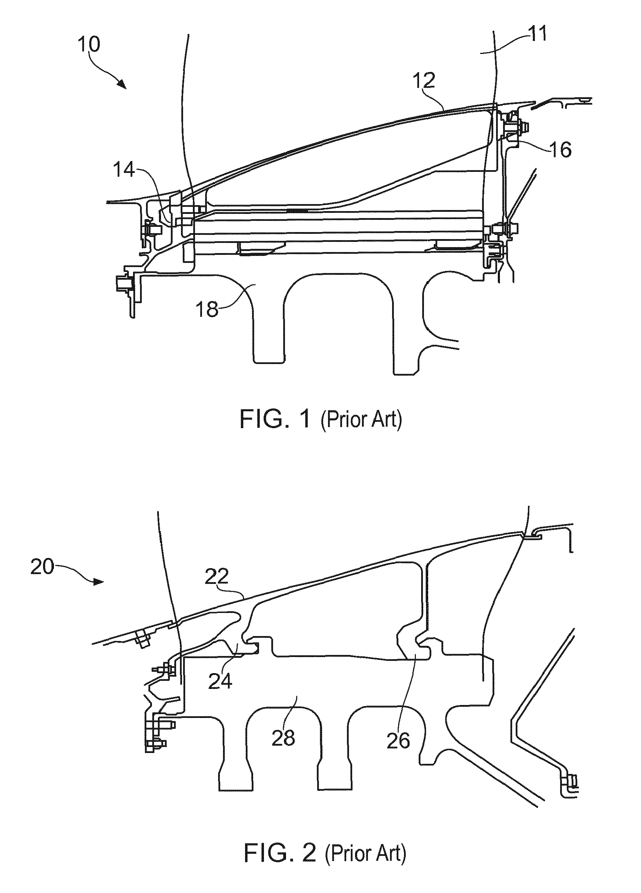

Figure 1 shows a section view through one conventional annulus filler arrangement 10 adjacent to a fan blade 11. The annulus filler 12 is a beam-like member which is fixed to intermediate support components 14, 16 at the fore and aft ends thereof. The intermediate supports are typically annular in form and are attached to the fan disc assembly 18 using further fixings so as to support the annulus filler for rotation therewith in use.

Figure 2 shows an alternative conventional arrangement 20, in which the annulus filler 22 comprises hook formations 24 and 26 depending from its underside which engage with corresponding formations on the fan disc assembly 28. Such an annulus filler is typically formed of an aluminium alloy, which may be machined form a solid forging.

The support rings and associated components for attachment of the annulus filler of Figure 1 add complexity and weight to the assembly, which adds to the manufacturing costs. Also it will be appreciated that there is a constant need to reduce the weight of gas turbine engines in order to improve fuel efficiency. Whilst the arrangement of Figure 2 can offer reduced weight for the assembly as a whole, the attachment formations add complexity and weight to the filler body itself. The attachment formations 24, 26 require large forging envelopes, which increases the cost of manufacture.

The tolerances during manufacture and also the relative movement of components, most notably fan blades, in use mean that a separate sealing material is required to be inserted between the filler and the fan blades on either side thereof, as well as between the filler and the spinner fairing or make-up piece. This is to ensure that a continuous air-washed surface is presented to the oncoming flow.

For either of the designs of Figures 1 and 2, there also exists a likelihood of mis-fitting or misalignment during assembly. This likelihood, and the number of associated assembly steps, is reduced for the configuration of Figure 2 since the hooks 24, 26 provide alignment features. However any potential for mis-fitting is generally undesirable as it can have serious consequences during operation.

Furthermore, conventional annulus fillers as described above have been found to be prone to stress concentrations during use. The centrifugal loading and vibrations experienced by the annulus filler as it rotates in use mean that stress concentrations can negatively impact the life of the component. In order to provide components that have an expected life, which is better in tune with the engine life, the annulus filler is strengthened by adding mass. Accordingly a sub-optimal design is achieved in terms of its operational performance in order to achieve a balance between the different design considerations for the component.

It is an aim of the present invention to provide an annulus filler which mitigates at least some of the above identified problems.

According to a first aspect of the invention there is provided an assembly for an axial flow machine, the assembly comprising an array of members circumferentially spaced about the machine axis, each member extending from a radially inner end to a radially outer end with respect to said axis and having opposing outer surfaces extending between a leading edge and a trailing edge thereof with respect to the direction of oncoming fluid flow in use, and, a plurality of annulus fillers extending between the outer surfaces of adjacent members, wherein each annulus filler is joined with an outer surface of an associated member at a location between the inner and outer ends in a manner which supports the annulus filler in use.

Preferably the join between the annulus filler and its associated member is sufficient to bear any, or any combination, of: the weight of the annulus filler; an aerodynamic force experienced by the annulus filler in use; and/or a centrifugal force experienced by the annulus filler in use. The annulus fillers may be supported by the associated members only. The annulus fillers may be devoid of further support formations. The annulus fillers may be considered to be self-supporting on the members.

In one embodiment, the members are supported at their radially inner ends by a common hub or disc member. Each annulus filler may be suspended by the associated member at a radially spaced location from the hub/disc. The annulus fillers may be devoid of any support formations with the hub/disc (e.g. other than via the member).

The invention is advantageous in that it avoids the cost and weight associated with the provision of attachment formations on a fan disc. This may allow a smaller fan disc forging.

In one embodiment, each annulus filler is bonded with the outer surface of the associated member. Each annulus filler may be bonded to the member using an adhesive. The bonded region between an annulus filler and the outer surface of the member may beneficially extend over an area in contrast to the linearly extending seal arrangements of the prior art.

Each annulus filler may comprise a composite material. Each annulus filler may comprise glass and/or carbon fibres. Each annulus filler may comprise a composite material having reinforcement particles therein.

The annulus filler and/or outer surface of the member may comprise a glass surface layer in the vicinity of the bond. An adhesive layer may be located therebetween.

Each annulus filler may depend outwardly from an associated member surface, for example in a substantially circumferential direction with respect to the axis.

In one embodiment, each annulus filler extends part way between adjacent members. Each annulus filler may have an edge which is part-way between adjacent members and which adjoins an opposing edge of an adjacent annulus filler so as to form a continuous annulus filler assembly between the adjacent members. The opposing edges may be abutting and/or provided with a seal therebetween. Each annulus filler may extend substantially half-way between adjacent members.

Each annulus filler may be joined to the member a short distance from the inner end. The inner end of the member may comprise an attachment or root formation. The annulus filler may be joined to the member adjacent, or immediately adjacent the attachment formation, for example in an edge-of-bedding region of the member. The annulus filler may be joined to the member in a region radially inward of the aero line. The region may comprise a blade flank and may extend for example over any area between the disc post and, up to or including, the annulus line for a fan blade.

Each annulus filler may be joined to the member along a line or area extending in a direction between the leading and trailing edges of the member. The annulus filler may be joined to the member along greater than 60% or 70% of the distance between the leading or trailing edges.

Each annulus filler may comprise a first wall which extends from the member in a substantially circumferential direction. The first wall may have an outer surface which defines a fluid-washed surface between the adjacent members in use. Each annulus filler may comprise a second wall which is angled relative to the first wall. The second wall may be bonded to the outer surface of the member. The second wall may follow the contour of the outer surface to which it is bonded. The annulus filler may be bonded to the outer surface over substantially the entire area of the second wall. The second wall may adjoin the first wall at a common edge or else may be spaced therefrom. The first and second walls may be formed of a common piece or unitary article shaped to provide said walls.

In one embodiment, the annulus filler comprises an intermediate wall. The intermediate wall may extend between the first and second walls. The third wall may brace the first wall against the second wall. The third wall may contact or join the first wall at a location spaced from the second wall, typically on an underside of the first wall. The third wall may be angled, typically obliquely angled, relative to the first and/or second walls. The first, second and third walls may define a substantially triangular enclosure in section.

In one embodiment, the first and second walls are spaced by the third wall, which may be an intermediate wall. The first and third walls may form a T-shaped structure in section. The first wall may contact the member along an edge thereof, which may be spaced from the second member, and which may be provided with a seal between said edge and the member.

One or more mechanical fasteners may be used to join the annulus filler to the member. One or more bolt may pass through the member between the opposing sides thereof so as to hold an annulus filler to either side. The member may be provided with one or more projections or recesses on either or both outer surfaces thereof to key with a corresponding formation on the annulus filler.

Each member may have an annulus filler joined to both of the opposing surfaces thereof.

Each annulus filler may extend forwardly of the leading edge of the member and/or rearwardly of the trailing edge of the member. Abutting or adjacent annulus fillers may comprise an end face or tab portion for contact with a corresponding end face or tab portion on an adjacent annulus filler. Such features may serve to resist deformation of the adjacent annulus fillers in use in the region of the interface therebetween. The end face or tab portion may extend in a substantially radial direction, for example radially inwardly from the first wall of the annulus fillers.

The member may comprise an aerofoil. The opposing sides may comprise a pressure and a suction side of the aerofoil. The member may comprise a fan blade.

The member may comprise a metal or composite material or structure. The member may comprise titanium.

The assembly may comprise a rotor assembly, such as a fan assembly. The assembly may comprise a gas turbine engine sub-assembly.

According to a second aspect of the invention there is provided a fan blade for a assembly within a gas turbine engine, the fan blade having opposing pressure and suction surfaces extending between a root end and a tip end of the blade, said surfaces extending in a fore and aft direction between a leading edge and a trailing edge of the blade, and, an annulus filler joined to at least one of said pressure and suction surfaces so as to define a wall extending outwardly from said surface, wherein the annulus filler is bonded to said surface over an area located between the wall and the root end of the blade such that the blade supports the annulus filler in use.

The wall may be a first wall portion. The annulus filler may be bonded to said surface via a second wall portion which may follow the contour of the surface of the blade. The second wall portion may depend from the first wall portion part way towards the root end of the blade.

The blade may have an annulus filler joined to both of said pressure and suction surfaces.

The annulus filler may be bonded to the outer surface of a blade via an adhesive material interposed therebetween.

According to a third aspect of the invention, there is provided an annulus filler for an axial flow machine, such as a gas turbine engine, the annulus filler comprising a first wall portion arranged to define a fluid washed surface in use, a second wall portion shaped to follow the contour of a pressure or suction surface of a fan blade to which the annulus filler is to be attached, the second wall providing a bonding area for joining to the fan blade surface at a location between the first wall and a root portion of the blade.

Any of the features defined above in relation to any one aspect of the invention may be applied to any further aspect.

Practicable embodiments of the invention are described in further detail below by way of example only with reference to the accompanying drawings, of which:
Figure 1 shows a section through a first example of an annulus filler assembly according to the prior art;
Figure 2 shows a section through a second example of an annulus filler assembly according to the prior art;
Figure 3 shows a half longitudinal section through a gas turbine engine in which the present invention may be applied;
Figure 4 shows a three-dimensional view of an annulus filler according to a first example of the invention;
Figure 5 shows a section through the annulus filler of Figure 4;
Figures 6a and 6b show section views through annulus fillers according to two further examples of the invention;
Figures 7a and 7b show respective three-dimensional views from the rear and the front of a further example of an annulus filler according to the invention;
Figure 8 shows a section view through a further example of an annulus filler according to the invention;
Figure 9 shows a section view of anti-rotation features of an annulus filler;
Figure 10 shows a schematic section view through a portion of a join between an annulus filler and a member according to one example of the invention; and,
Figure 11 shows a section view through a member and annulus filler arrangement according to a further example of a join according to the invention.

The present invention derives from the understanding that an annulus filler can be mounted to a radially-extending member, such as a fan blade, instead of a common hub portion of the assembly, provided suitable annulus filler geometry and/or bond location are selected.

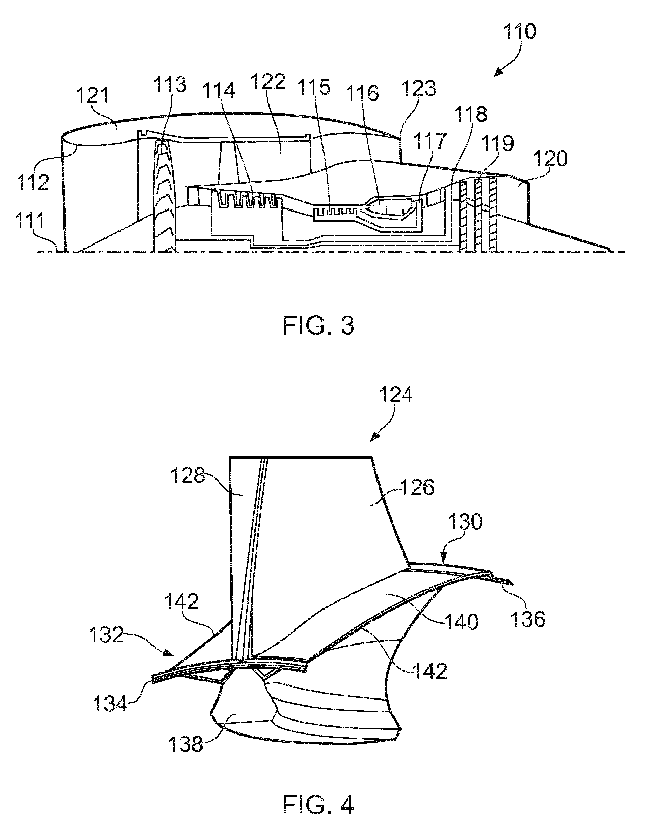

Turning to Figure 3, there is shown a ducted fan gas turbine engine, in which the present invention may be applied. The engine, generally indicated at 110, has a principal and rotational axis 111. The engine 110 comprises, in axial flow series, an air intake 112, a propulsive fan 113, an intermediate pressure compressor 114, a high-pressure compressor 115, combustion equipment 116, a high-pressure turbine 117, and intermediate pressure turbine 118, a low-pressure turbine 119 and a core engine exhaust nozzle 120. A nacelle 121 generally surrounds the engine 110 and defines the intake 112, a bypass duct 122 and a bypass exhaust nozzle 123.

The gas turbine engine 110 works in a conventional manner so that air entering the intake 112 is accelerated by the fan 113 to produce two air flows: a first air flow into the intermediate pressure compressor 114 and a second air flow which passes through a bypass duct 122 to provide propulsive thrust. The intermediate pressure compressor 114 compresses the air flow directed into it before delivering that air to the high pressure compressor 115 where further compression takes place. The intermediate 114 and high 115 pressure compressors comprise an annular passageway defined by a hub end wall of the compressor rotor and a, radially outer casing end wall. The rotor blades depend outwardly across the passage from the rotor end wall and the stator vanes typically depend radially inwardly from the casing.

The compressed air exhausted from the high-pressure compressor 115 is directed into the combustion equipment 116 where it is mixed with fuel and the mixture combusted. The resultant hot combustion products then expand through, and thereby drive the high, intermediate and low-pressure turbines 117, 118, 119 before being exhausted through the nozzle 120 to provide additional propulsive thrust. The high, intermediate and low-pressure turbines 117, 118, 119 respectively drive the high and intermediate pressure compressors 115, 114 and the fan 113 by suitable interconnecting shafts.

Alternative gas turbine engine arrangements may comprise a two, as opposed to three, shaft arrangement and/or may provide for different bypass ratios. Other configurations known to the skilled person include open rotor designs, such as turboprop engines, or else turbojets, in which the bypass duct is removed such that all air flow passes through the core engine. The various available gas turbine engine configurations are typically adapted to suit an intended operation which may include aerospace, marine, power generation amongst other propulsion or industrial pumping applications.

The annulus filler arrangement according to the present invention may be applied for example as part of the fan assembly 113, which comprises a circumferential array of fan blades mounted at their root to a common disc assembly for rotation about the engine axis 111 in use. The blades are thus supported at their root and extend to their radially outermost tips. The blades may be conventional in design and further details of the fan assembly will not be described here for brevity since those details will be known to the person skilled in the art.

Turning now to Figure 4, there is shown an example of a fan blade 124 having an annulus filler attached thereto in accordance with the present invention. The annulus filler is preferably formed as a composite material component separate to the blade itself and subsequently attached thereto prior to assembly of the blade within a fan.

The blade 124 has a pressure side 126 and a suction side 128 as would be understood by the person skilled in the art. The annulus filler arrangement of Figure 4 comprises two annulus filler members, 130 and 132, attached to the pressure and suction sides of the blade respectively.

The annulus filler members 130 and 132 are shaped (i.e. curved) to follow the contour of the respective aerofoil surface of the blade.

Each filler member 130, 132 has a leading edge formation 134 and a trailing edge formation and a gas washed surface extending there-between. The leading edge 134 protrudes in front of the leading edge of blade 124 and the leading edge protrudes aft of the trailing edge of the blade. At each of the leading and trailing edges 134, 136 a lip formation is provided such that the leading and trailing edges can be inserted beneath an adjacent gas washed surface during assembly of the fan. For example, the leading edge will typically be inserted beneath a nose cone cover portion (not shown) and the trailing edge beneath an aft cover member of the fan assembly so as to define a substantially continuous gas washed outer surface.

The leading edge 134 of the annulus filler members is also located inwardly of the trailing edge in a radial direction (i.e. closer to the blade root 138) so as to define a curved gas-washed outer surface 140 which increases in height along the span of the blade with distance from the leading edge to the trailing edge (i.e. with chord length).

The outer surface 140 of each filler member 130, 132 is provided by a wall portion of the filler which extends outwardly of the blade surface towards an outer edge 142. In this regard the outer surface 140 of each filler member extends away from the blade (i.e. in a circumferential direction with respect to the axis of fan rotation in use) by a portion of the distance between adjacent blades of the fan assembly. In this manner the outer edge 142 meets with the corresponding outer edge of a filler member attached to an adjacent fan blade within the fan assembly in use. The outer edges 142 of the adjacent blades may provided with an intermediate seal, for example using conventional seal materials, so as to form a continuous outer annulus filler surface in use. The seal may be provided (i.e. formed with or bonded to) the outer edge 142 of one filler member and sealed/bonded against the opposing edge of an adjacent filler during assembly.

The outer surface 140 of each individual annulus filler would typically be shaped/sized so as to span half the gap between adjacent blades, although the filler members may be wider or narrower in this dimension provided the adjacent member is correspondingly sized to fill the inter-blade gap.

The annulus filler members are bonded to the fan blade substantially along the full length of the blade between its leading and trailing edges. This arrangement provides a weight efficient annulus filler with evenly distributed stresses. A further benefit is that a smaller and/or simplified fan disc can be provided since the need to accommodate annulus fillers by the fan disc is removed. Accordingly, beyond the possible cost and weight benefits of the annulus fillers themselves, further cost and weight savings may be achieved in associated components.

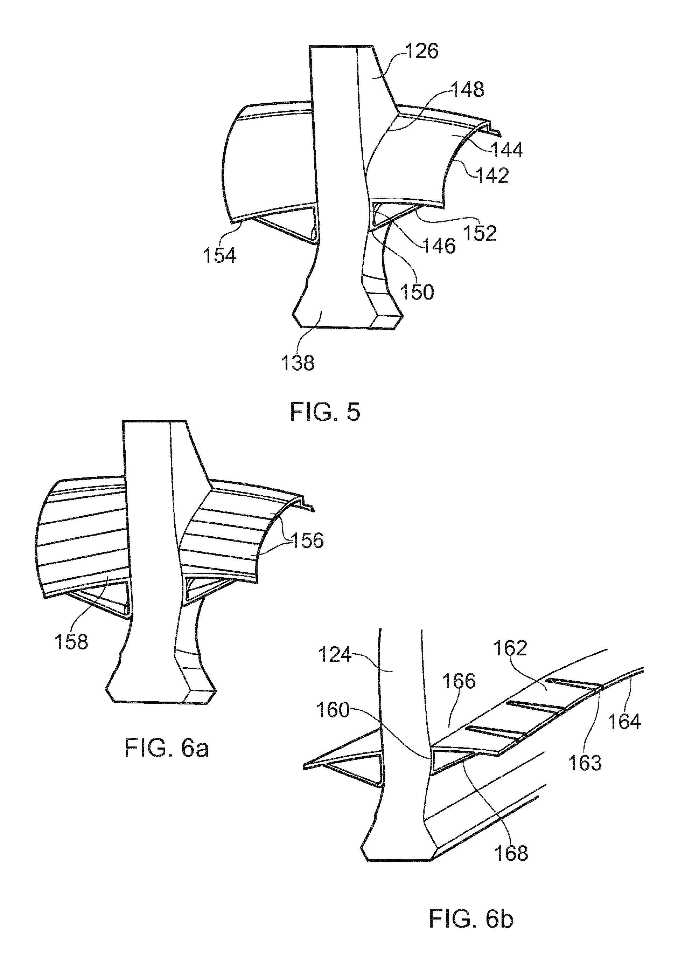

Turning now to Figure 5, there is shown a section through the annulus filler arrangement of Figure 4. Here it can be seen that each annulus filler member comprises a plurality of, typically adjoining, walls. A first wall 144 defines the gas washed-surface 140 of the annulus filler and extends in a circumferential direction from the blade. A second wall 146 meets the first wall at edge 148 against the corresponding blade surface 126. The edge 148 and the second wall 146 follow the contour of that blade surface so as to maintain contact therewith along the length of the blade.

The second wall 146 provides a bonding surface which is adhered to the blade surface as will be described in further detail below. The second wall extends a short distance along the blade surface from the edge 148 towards the root end 138 of the blade. The second wall stops short of the blade root formation 138 and turns away from the blade surface back towards the first wall 144 at edges 150.

A third wall 152 extends from the edge 150 towards the first wall at a location spaced from the edge 148.

The first 144 and second 146 walls are substantially perpendicularly angled when viewed in section, whereas the third wall 152 is obliquely angled relative to both the first and second walls. Accordingly the third wall provides an inclined surface in use, which may be considered akin to the hypotenuse of a right-angled triangle when viewed in section. In this regard the filler members have a hollow triangular section. In the embodiment shown the third wall contacts the first wall at edge 154 which is spaced from the outer edge 142.

The third wall supports or braces the first wall, i.e. at a location spaced from the blade surface, so as to increase the strength of the filler member. In particular the third wall assists the first wall in resisting twisting or bending moments in use.

The first second and third walls are co-formed using conventional composite manufacture techniques so as to define a unitary annulus filler member in which each wall comprises a differently oriented wall portion of a common body of material.

The outer surface 144 and/or outer edge 148 of the filler member typically spans a region of the blade flank. The leading edge 134 of the filler member may be located at an radially inner location on the blade compared to that of the trailing edge 136 of the filler member. The outer surface 144 could be angled relative to the rotation axis anywhere between 0°to 45° depending on the specific fan design to be accommodated. The outer surface 144 could be angled in a linear or curved manner, for example encompassing a convex, concave or any spline between the two points. The precise radial positions of the inner and outer edge along the blade surface are highly dependent on the blade design but could vary anywhere between, for example, a value of 150mm to 500mm. Those locations may lie anywhere between the disc post and annulus line. Potentially an annulus filler could bond above the annulus line also.

The above described embodiments have a substantially uniform wall thickness or profile between the leading and trailing edges. Such a form of annulus filler is relatively stiff. Whilst it is desirable that the annulus filler substantially retains its shape under aerodynamic loading without deformation, it is noted that, in use, fan blades can deform. Such deformation generally increases in magnitude with radial distance, from minimal deformation at the bade root end to maximal deformation at the blade tip. Furthermore, the annulus fillers in use may be required to offer greater impact resistance in use. In some embodiments, the makeup of the composite annulus filler may be modified to accommodate the desirous material properties. Additionally or alternatively, Figures 6 to 9 show various embodiments in which the annulus fillers have been modified in order to offer an improved response to loads in use.

In Figure 6a, the annulus filler members of Figures 4 and 5 are formed as a plurality of filler slices or sections 156. Each section may comprise a portion of the first, second and third walls as described above. The sections may be arranged side-by-side to form the length of the annulus filler. Accordingly the sections may be considered to comprise cross or lateral sections of the filler member. A plurality of such sections, for example between two and twenty sections may be provided.

Each annulus filler section may be attached to the blade, for example individually. A flexible seal material 158 is interposed between each adjacent section 156. A conventional seal material could be used. Such a construction allows each section of the blade a degree of independent movement relative to the remaining sections such that the filler could deform to accommodate the loads applied thereto in use whilst the annulus filler remains attached to the blade so as to provide a suitable gas washed surface in use.

In Figure 6b, a second alternative is shown, in which a single annulus filler member is provided at each of the pressure and suction sides of the blade 124, similar to the arrangement described in relation to Figures 4 and 5. That is to say each annulus filler member has a continuous second wall 160 as described above. However the first wall 162 has a series of discontinuities or slits 163 spaced along its length. Such discontinuities 163 typically extend from the outer edge 164 towards the edge 166 against the blade surface (i.e. in a lateral or circumferential direction).Those discontinuities or cut-outs are filled with a rubber or otherwise conventional seal material. In this embodiment, generally wedge shaped or tapered seal members are provided in correspondingly shaped cut-outs. Thus the first wall 162 of the annulus filler can deform to varying degrees along its length, whilst retaining a continuous gas-washed surface.

The annulus filler members of Figure 6b may also have discontinuities along the length of the third wall 168, which may be spaced and/or aligned according to the discontinuities 163 in the first wall. Thus the third wall can also deform to varying degrees along its length so as to support the first wall in a suitably flexible manner. The discontinuities in the third wall may or may not be filled with seal material. The continuous back wall 160 for bonding to the blade surface may ease handling and assembly of the annulus filler, whilst providing the desired flexibility. The embodiment of Figure 6b beneficially displays high stiffness in the radial direction but greater flexibility in an axial direction.

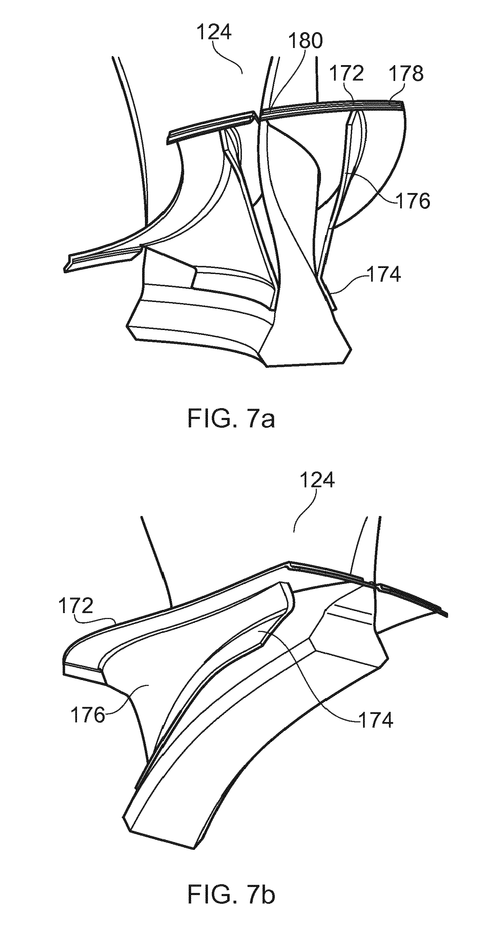

Turning now to Figures 7a and 7b, there is shown a further embodiment of the invention having a different construction to that of Figures 4-6. In this embodiment the annulus filler members 170 each have a first 172, second 174 and third 176 wall construction similar to that described above. However in this embodiment, the second wall 174, which is bonded to the blade surface does not share a common edge with the first wall 172 (i.e. which provides the gas-washed annulus filler surface in use). Instead the first wall 172 is spaced from the second wall 174 by the third wall 176, which comprises an intermediate support wall.

The first wall 172 has an outer edge 178 spaced from the blade 124 and an inner edge 180, which contacts the surface of the blade. A conventional seal material or strip may be provided between the blade surface and the edge 180.

The third wall 176 joins the first wall part way between the opposing edges 178 and 180 so as to form a T-shaped junction therewith when viewed in cross-section.

In this embodiment, the second wall can be bonded closer to the root end of the blade 124, where the magnitude of displacement of the blade in use (i.e. under aerodynamic/centrifugal loading) is reduced. For example, the second wall in this embodiment is bonded in a region above the edge-of-bedding, but below the aero line. Such a region could extend for example from the edge of bedding up to, for example, 150, 200 or 250mm therefrom.

The blade 124 is thicker here and displacement is less than a 1/3 of the deflection at aero line. The annulus filler construction for each blade may otherwise be produced in two parts (for the respective pressure and suction surfaces of the blade) in a manner as described above.

The intermediate third wall 176 in this embodiment may thus elevate the gas washed outer wall 172 to a suitable location along the length of the blade for use and may allow a degree of flexion such that the first wall 172 can move in unison with deformation of the blade at the aero line.

In light of the shape of the blade towards its root, the second wall 176 is likely to be non-perpendicularly or obliquely angled relative to the first wall, for example at an acute angle greater than 45°. The second wall is orientated relative to the third wall 176 so as to form an obtuse angle therebetween when viewed in section.

In Figures 7a and 7b, locating features, e.g. mechanical locating or keying features may also be provided near to the leading (e.g. beneath the spinner) and trailing edges of the blade. In operation, centrifugal forces would thus hold such annulus fillers in the correct positions in a manner akin to a three-point fixing.

Advantageously, the embodiment of Figures 7a and 7b has little effect on the frequency response of the blade because the bond line is close to edge-of-bedding, which is a node.

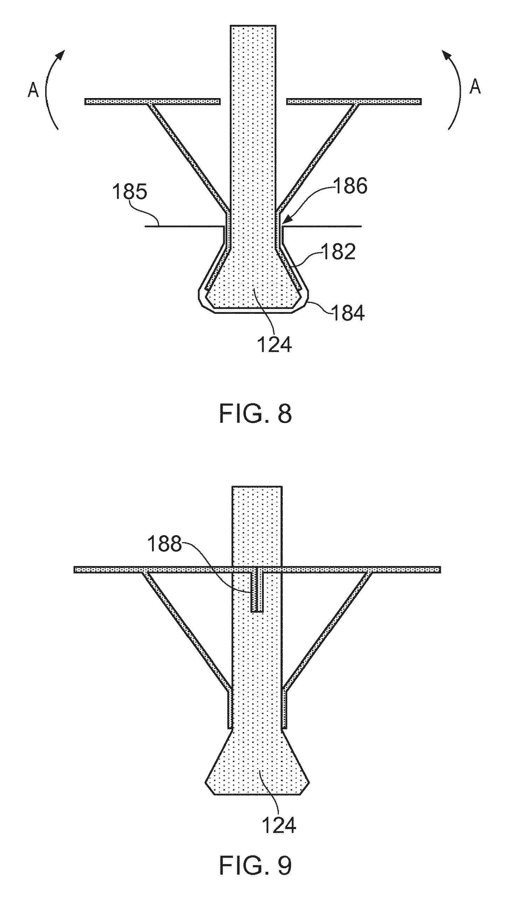

In use, the centrifugal forces acting on the annulus filler will tend to cause a bending moment in the first wall of the annulus filler in the direction arrows A shown in Figure 8. This leads to a tendency towards peeling of the second wall away from the blade which peeling action is resisted by the strength of the bond between the second wall and the blade surface.

In a further embodiment, as shown in Figure 8, additional features are provided to inhibit or reduce the tendency of the annulus filler to be pulled away from the blade surface. The second wall 182 of the annulus filler member in this embodiment may extend into the slot 184 in the fan disc 185 which accommodates the root of the fan blade 124. A portion 186 of the second wall may protrude beyond the slot in a manner similar to the wall 174 of Figures 7a and 7b.

The portion of the second wall 182 within the slot 185 may be bonded to fan disc or blade. In such an embodiment, the annulus filler is trapped between the blade and the fan disc in use such that the centrifugal force acting on the blade apply a compressive force on the second wall 182. This embodiment is perceived to inhibit any peeling of the second wall of the annulus filler away from the blade in use

Additional or alternative anti-rotation features are shown in Figure 9. Such features comprise a tab formation 188 at an edge of the annulus filler which is intended to abut against an adjacent annulus filler edge. The opposing tab formations 188 provide a contact area between the first walls of the adjacent annulus fillers in place of the line/edge contact described above. The opposing tabs may be bonded using any of the techniques described herein.

The tabs 188 depend radially inwardly (i.e. towards the root end of the blade or away from the gas washed surface) from the first wall.

The tabs 188 in this embodiment depend from a lateral edge of the annulus fillers in a portion of the annulus filler which extends either forwardly of the leading edge of the blade or rearwardly of the trailing edge of the blade 124. The tabs may be substantially in front of or behind the blade as shown in Figure 9, proximate the leading or trailing edge/lip of the annulus filler member.

Such anti-rotation tab features may be applied to any embodiment of the invention in which adjacent annulus fillers meet at an interface, for example at the outer edges thereof between adjacent blades or else fore or aft of a common blade.

If a tab or stop formation is fitted to each adjacent filler member then the relative movement of the first wall of each filler member will balance the loading of the adjacent filler member in the opposing direction filler member, thereby significantly reducing forces on the bond line/area between the filler members and the associated blade. The provision of tab formations which are integral with the wall structure of filler member itself is beneficial to the manufacturing/assembly. The opposing tab formations may or may not be bonded together, dependent on their location.

In any of the above described embodiment, the annulus filler members preferably comprise a composite material structure. Such a structure may be bonded to conventional composite or metal blades as required. For example, the composite fan blade could comprise a carbon-fibre reinforced epoxy material. Such a composite provides good compatibility for bonding annulus fillers to form a blade platform. The bonding of a composite annulus filler to a metallic blade requires modification of the stiffness and deflection properties of the annulus filler in order to more closely match or accommodate the properties of the blade.

The annulus filler members according to any embodiment of the invention may comprise a thermosetting polymer, typically a synthetic resin, such as an expoy. However since the annulus filler is predominantly required to withstand lower-than-ambient temperatures, rather than elevated temperatures, thermoplastic polymer materials may also be used, such as, for example a semicrystalline thermoplastic materials provided they display suitable strength and resilience. A polyether material such as polyether ether ketone (PEEK) or polyetherimide (PEI), or else a polyamide material may be suitable.

The material makeup of the walls of the annulus fillers preferably comprises a composite having a reinforcing structure or substrate, such as continuous (e.g. aligned) fibres, short fibres (aligned or randomly-oriented) or reinforcement particles within the matrix material/resin. Different matrix and substrate configurations can be provided to derive suitable material properties for the blade in question. For example, in the event that delamination of a continuous-fibre composite material is considered to be a problem, the composite material may be made either without fibres or with short, randomly oriented fibres or small reinforcement particles, which would improve the annulus filler toughness and provide a more impact worthy filler.

In one example of the invention, the annulus filler could be a thermoset composite and could utilise a fibre reinforcement which is pre-impregnated with the matrix material, or else it could be dry preformed and then injected with resin using conventional techniques such as resin transfer moulding (RTM), for example vacuum-assisted RTM, or similar methods.

Substrate preforms can be made using conventional techniques prior to matrix injection, such techniques including fibre placement, tape laying/winding, 3D braiding, filament winding, and machine laid stiched or woven preforms. For example, the first wall of the annulus filler could be formed as box sections, by winding a fabric tape onto a mandrel and subsequently winding filament over the tape. The resulting pre-form could then be RTM moulded. Filament winding or braiding could be used if a box type section was utilised

For a reduced-cost annulus filler member, a long chopped fibre bulk moulding compound could be used. This would have fibres typically of 1" or greater in length in an epoxy matrix system. Typical materials are HexMC from Hexcel, MS-4A from YLA composites. In this and other embodiments the first wall of the annulus filler at least would be produced by a compression moulding system.

One particular embodiment of the invention may utilise a hybrid carbon-and-glass fibre substrate, such as, for example, as a pre-impregnated structure which would benefit from the improved impact performance of the hybrid system but in a pre-impregnated form. The structure may be pre-impregnated with, for example, an expoxy resin.

In other embodiments, particularly for attachment to a metallic blade, a fibre metal laminate material system may be used. Thin metal layers typically aluminium layers, may be interspersed with a fibre composite material, e.g. a glass fibre and epoxy matrix layer. Such composite/metal materials may be referred to as Glass Laminate Aluminium Reinforced Expoxy (GLARE).

Another potential laminate material construction for the annulus filler involves using rubberised layers, potentially in sheet form between layers of fibre composite. This could again increase the impact performance of the composite.

In any embodiment, the fibre orientations of the annulus filler could be tailored to match the stiffness of the blade. If the fibres in the annulus filler walls are aligned axially (to the engine) or a low angle (up to ±30° from axial) then the filler would have greater potential to move with the blade in use.

In any embodiment, conventional adhesives, for example such as expoy adhesives or similar, may be applied at the interface between the blade surface and the adjacent face of the annulus filler member. In one particular embodiment, a filled adhesive, such as a filled paste adhesive could be used, for example in which the adhesive is filled with fibres or particulate material to improve the properties of the bond with an associated composite annulus filler. Glass or carbon or metallic filler materials may be used dependent on the annulus filler material selection and/or blade structure.

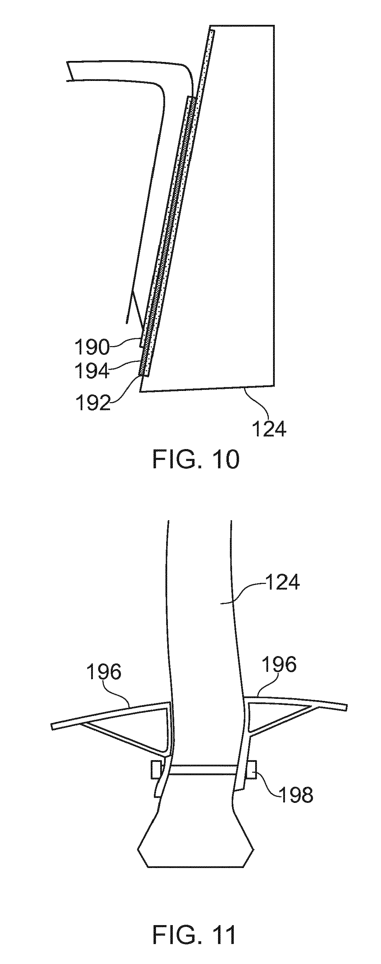

Turning to Figure 10, there is shown a section view through the interface between the second wall of the annulus filler and the adjacent surface of the blade according to one example of the invention. In this example an outer ply or layer 190 of the annulus filler adjacent the opposing blade surface comprises glass, typically as glass-fibres.

A glass layer of this kind may also be provided as an outer layer or ply 192 of the blade surface structure. An adhesive layer 194 is inserted between the outer ply 190 of the second wall of the annulus filler member and the blade surface 192. The adhesive layer may comprise a glass-filled adhesive, such as an epoxy adhesive.

The system of Figure 10 may be applied to a glass fibre composite annulus filler or else an annulus filler having a hybrid construction, in which the outer ply comprises glass fibre but one or more further ply comprises, for example, a carbon substrate or a carbon/glass substrate.

The provision of a glass layer at the outer surface of the annulus filler and/or blade surface can provide an improved bond since the high strain capability (reduced stiffness) of the glass would offer greater compliance within the bonded joint than an all-carbon solution. The remainder of the composite structure of the annulus filler could be a carbon fibre structure to provide greater structural integrity away from the joint.

Additionally or alternatively a flexible or rubberised adhesive could be used. This would again fix the annulus filler to the blade in a manner which allows additional relative movement between the two sides of the joint. As there is a relatively large surface over which a bind can be created, there is potential for silicone type adhesives to be used.

Turning now to Figure 11, there is shown an additional or alternative means for mechanically attaching annulus fillers 196 to a blade 124. In this example, the second wall 198 of the annulus filler is extended in length so as to provide a suitable attachment formation. A bolt 198 or similar fixing pin or rod passes through the annulus filler wall and the body the blade 124, typically in a lateral direction. In this example, the bolt passes through opposing annulus filler members on opposing sides of the blade 124 so as to mechanically fasten both annulus filler members thereto. The bolt has an end head formation which can be tightened so as to retain the annulus filler walls and blade in compression (i.e. with a tensile force applied to the bolt).

Bolts 198 may be provided at a plurality of locations between the leading and trailing edges of the blade, for example with one at each end of the annulus filler member. The high stiffness of the filler and the blade geometry allows the filler to be mechanically locked in place, typically at a location close to the root end of the blade. Such a mechanical fixing, in place of a adhesive bond, would allow for easy removal of the annulus filler from the blade in service. The provision of multiple bolts through the blade may more evenly spread the loading on the annulus filler in use.

In some embodiments a mechanical fixing could be combined with adhesive bonding, such that if the bond line failed, the filler remained attached, until the bond line was able to be inspected. Using a mechanical attachment plus bonding would allow lower strength adhesive to be used that would be easier to process and remove if the blade needed to be refurbished

As an alternative to separate pressure and suction side annulus fillers, a single annulus filler member could be provided, which passes around the leading edge of the blade. Such an annulus filler may have an open-ended central recess into which the blade can be inserted, e.g. a horseshoe shape. The annulus filler could then be bolted at a plurality of locations between the leading and trailing edges of the blade.

In order to position these accurately, features could be moulded or machined into the blade for location. These could be recesses or notches for the filler or bolt, they could be raised features that the annulus filler would correspondingly have a notch to receive.

Alternatively studs could be moulded into the blade which would then allow the fillers to be bolted to the blade. This could avoid severe stress concentrations in the fan blades resulting from through bolts. The annulus filler (typically the second wall thereof) would have openings or recesses to accommodate such studs. The annulus filler could then be bonded using adhesive and/or mechanical fixings to the studs.

A rubber layer could be incorporated between the blade and the filler. If the filler was clamped against this, by using bolted attachment front and rear as above, then the compliance in the rubber would allow the blade to flex relative to the filler.

One significant advantage offered by the present invention is a lightweight design for an annulus filler. The attachment of the annulus filler to the blade or disc slot allows for s simplified, hence more cost-effective, and also lighter fan disc. The invention can achieve these benefits without negative effect to aerodynamic performance. Furthermore the annulus filler can be formed using automated composite manufacture methods to reduce cost and weight. The thin composite sections mean manufacturing defects due to processing are minimised

Any excessive movement of the blade can be accommodated by the annulus filler and its attachment method. The stiffness of the annulus filler and blade can be matched and means of increasing compliance and flexibility in the system are available, as described above, in order to avoid any potential de-bonding issues.

## Claims

1. A fluid-washed assembly for an axial flow machine, the assembly comprising:
an array of members (124) circumferentially spaced about the machine axis, each member extending from a radially inner end (138) to a radially outer end with respect to said axis and having opposing outer surfaces (126, 128) extending between a leading edge and a trailing edge thereof with respect to the direction of oncoming fluid flow in use, and,
a plurality of annulus fillers (130, 132), wherein each annulus filler is affixed against an outer surface of an associated member at a location between the inner and outer ends in a manner which supports the annulus filler in use.

2. An assembly according to Claim 1, wherein the members are supported at their radially inner ends about a common mount and each annulus filler is suspended by the associated member at a radially spaced location from the mount.

3. An assembly according to Claim 1 or 2, wherein each annulus filler comprises a first wall (144) which extends outwardly from the surface of the associated member, the first wall having an outer surface (140) which defines at least a portion of a fluid-washed surface extending between adjacent members,
wherein each annulus filler comprises a second wall (146) by which the annulus filler is affixed to the outer surface of the member, the second wall being shaped to lie against said outer surface.

4. An assembly according to Claim 3, wherein the second wall defines a contact area, over which the second wall is held against the outer surface.

5. An assembly according to Claim 3 or Claim 4, wherein the second wall shares a common edge (148) with the first wall and extends in a direction towards the radially inner end of the member.

6. An assembly according to Claim 3 or Claim 4, wherein the second wall (174) is spaced from the first wall (172) and the first wall is held at a radially outer location relative to the second wall by an intermediate support (176).

7. An assembly according to any one of Claims 3 to 6, comprising a third wall (168, 176) extending between the first and second walls and arranged at an angle thereto in order to support the first wall at a location spaced from the outer surface of the member.

8. An assembly according to any preceding claim, wherein each annulus filler comprises a composite material having reinforcing fibres or particles suspended therein.

9. An assembly according to Claim 8, wherein an outer surface of each annulus filler which lies against the outer surface of the associated member comprises a layer of glass fibres.

10. An assembly according to any preceding claim, wherein each annulus filler extends part way between adjacent members and has an edge (142, 164) which lies adjacent an opposing edge of an adjacent annulus filler so as to form a substantially continuous annulus filler assembly between the adjacent members.

11. An assembly according to any preceding claim, wherein the inner end of each member comprises an attachment formation and each annulus filler is affixed to the member adjacent, or immediately adjacent, the attachment formation.

12. An assembly according to any preceding claim wherein each member has an annulus filler joined to both of the opposing surfaces thereof.

13. An assembly according to any preceding claim wherein the members comprises fan blades of a fan blade assembly and the axial flow machine comprises a gas turbine engine.

14. An aerofoil (124) for a assembly within a gas turbine engine, the aerofoil having:
opposing pressure (126) and suction (128) surfaces extending between first (138) and second ends of the aerofoil, said surfaces further extending in a fore and aft direction between a leading edge and a trailing edge of the aerofoil; and,
an annulus filler (130, 132) affixed to at least one of said pressure and suction surfaces so as to define a wall (144) extending outwardly from said surface between the first and second ends thereof,
wherein the annulus filler is affixed to said surface over an area located between the wall and the first end of the aerofoil such that the aerofoil supports the annulus filler in use.

15. An annulus filler (130, 132, 170) for a gas turbine engine, the annulus filler comprising:
a first wall portion (144, 172) arranged to define a fluid washed surface in use,
a second wall portion (146, 174) shaped to follow the contour of a pressure or suction surface of a fan blade to which the annulus filler is to be attached, the second wall providing a fixation area for joining the annulus filler to the fan blade surface at a location between the first wall and a root portion (138) of the blade.
